# EUROPEAN PATENT APPLICATION

(11) **EP 2 543 708 A1**
(43) Date of publication of application: **09.01.2013**
(21) Application number: 12175160.6
(22) Date of filing: 05.07.2012
(51) Int. Cl.: C09J 7/00, C09J 9/02

(54) **Conductive pressure-sensitive adhesive tape**

(30) Priority: 06.07.2011 JP 2011150364
(71) Applicant: NITTO DENKO CORPORATION, Ibaraki-shi, Osaka 567-8680 (JP)
(72) Inventor: Higuchi, Naoaki, Ibaraki-shi, Osaka 567-8680 (JP); Nakashima, Tooru, Ibaraki-shi, Osaka 567-8680 (JP); Yamanaka, Eiji, Ibaraki-shi, Osaka 567-8680 (JP)
(74) Representative: Grünecker, Kinkeldey, Stockmair & Schwanhäusser

(57) **Abstract**

A conductive pressure-sensitive adhesive tape contains an acrylic pressure-sensitsve adhesive, a conductive filler, and a heating foaming agent. An acrylic polymer can be preferably used as the acrylic pressure-sensitive adhesive. With the multiple conductive fillers being electrically connected to each other, conductive paths communicating from one of the major surfaces of the tape to the other major surface thereof are formed before temperature sensing. The heating foaming agent is a heating-type foaming agent that is foamed by being heated. The electrical connection between the conductive fillers, which has been formed before the heating foaming agent is foamed, is disconnected by the foamed heating foaming agent, and the conductive paths communicating from one of the major surfaces of the tape to the other major surface thereof are eliminated.

## Description

The present invention relates to a conductive pressure-sensitive adhesive tape, and in particular, to a conductive pressure-sensitive adhesive tape whose conductivity is eliminated by temperature sensing.

Conductive pressure-sensitive adhesive tapes are conventionally used in areas of personal computers and various electrical appliances, in the areas conductivity and adhesiveness being required. As one of still higher functions of the conductive pressure-sensitive adhesive tapes of this type, a conductive pressure-sensitive adhesive tape having the characteristic that its conductivity is reduced by temperature sensing is developed (see Japanese Patent Application Publication No. 2003-109428).

A conductive pressure-sensitive adhesive tape is required to have the characteristics that: before temperature sensing, sufficient adhesive force can be exerted in joining a metal material, such as stainless steel, aluminum, or the like, to an adherend, and sufficient conductivity is demonstrated for electrical connection between adherends; on the other hand, after temperature sensing, it is needed that the conductivity of the conductive pressure-sensitive adhesive tape is surely eliminated in order to insulate the adherends from each other. However, a conventional conductive pressure-sensitive adhesive tape cannot sufficiently achieve both the conductivity and adhesiveness before temperature sensing, and the reduction or elimination in/of the conductivity after temperature sensing.

The present invention has been made in view of these situations, and a purpose of the invention is to provide a conductive pressure-sensitive adhesive tape that can achieve both the conductivity and adhesiveness before temperature sensing (heating), and the elimination of the conductivity after temperature sensing (heating).

An embodiment of the present invention is a conductive pressure-sensitive adhesive tape. The conductive pressure-sensitive adhesive tape contains an acrylic pressure-sensitive adhesive, a conductive filler, and a heating foaming agent, and its conductivity is eliminated by being heated (temperature sensing).

In the conductive pressure-sensitive adhesive tape according to the aforementioned embodiment, the heating foaming agent may be a thermally expandable microsphere. A polymer that forms the acrylic pressure-sensitive adhesive may be photopolymerizable. A pressure-sensitive adhesive force of the tape, occurring under conditions in which the tape is peeled off in the 180° peeling-off direction at a tension speed of 300 mm/min after 30 minutes have elapsed at 23°C since the adhesion of the tape to SUS 304 that is used as an adherend, may be 5 N/20 mm or more.

Conductive pressure-sensitive adhesive tapes obtained by appropriately combining the aforementioned respective elements can be encompassed by the invention that seeks patent protection based on the present patent application.

Embodiments will now be described, by way of example only, with reference to the accompanying drawings, which are meant to be exemplary, not limiting, and wherein like elements are numbered alike in several figures, in which:
Fig. 1 is a schematic sectional view schematically illustrating the structure of a conductive pressure-sensitive adhesive tape according to an embodiment;
Fig. 2 is a schematic sectional view schematically illustrating the conductive pressure-sensitive adhesive tape after left uncontrolled under an atmosphere at 130°C for 5 minutes; and
Fig. 3 is a schematic view illustrating a method of evaluating the conductivity of the conductive pressure-sensitive adhesive tape.

The invention will now be described by reference to the preferred embodiments. This does not intend to limit the scope of the present invention, but to exemplify the invention.

Hereinafter, embodiments of the present invention will de described with reference to the accompanying drawings. The same or like components illustrated in each drawing are denoted by like reference numerals, and the duplicative descriptions will be appropriately omitted.

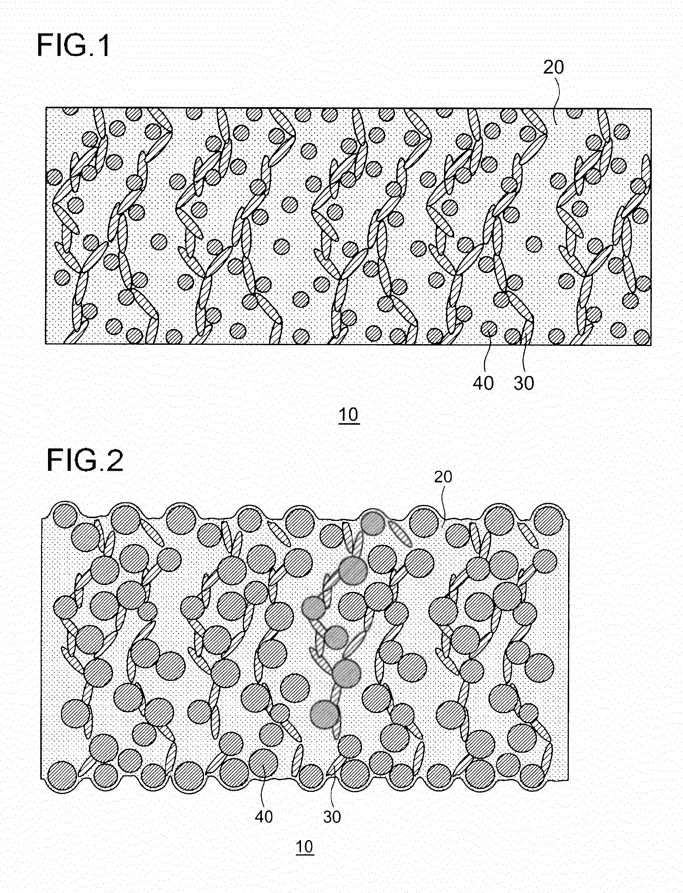

Fig. 1 is a schematic sectional view schematically illustrating the structure of a conductive pressure-sensitive adhesive tape 10 according to an embodiment. The conductive pressure-sensitive adhesive tape 10 contains an acrylic pressure-sensitive adhesive 20, a conductive filler 30, and a heating foaming agent 40. The conductive pressure-sensitive adhesive tape 10 has the characteristic that conductivity is demonstrated at normal temperature and is eliminated by being heated (hereinafter, also referred to as "temperature sensing"). Herein, the "conductivity is eliminated by being heated" means that a resistance value is not confirmed in a conductivity test performed after the conductive pressure-sensitive adhesive tape has been left uncontrolled under an atmosphere at 130°C for 5 minutes.

### <Acrylic Pressure-Sensitive Adhesive>

An acrylic polymer is preferably used as the acrylic pressure-sensitive adhesive 20. The acrylic polymer contains, as a monomer unit, 50% by weight or more of (meth)acrylic acid alkyl ester having a linear or branched C₁₋₂₀ alkyl group. The acrylic polymer can use the (meth) acrylic acid alkyl ester having a C₁₋₂₀ alkyl group alone or in combination of two or more thereof. The acrylic polymer can be obtained by polymerizing (preferably by photopolymerizing or UV polymerizing) the (meth) acrylic acid alkyl esters in the presence of a polymerization initiator.

The ratio of the (meth)acrylic acid alkyl ester having a C₁₋₂₀ alkyl group is 50% by weight or more to 99.9% by weight or less based on the total weight of the monomer components for preparing the acrylic polymer, preferably 60% by weight or more to 95% by weight or less, and more preferably 70% by weight or more and 93% by weight or less.

Examples of the (meth) acrylic acid alkyl ester having a C₁₋₂₀ alkyl group include, for example: (meth) acrylic acid C₁₋₂₀ alkyl esters, preferably (meth) acrylic acid C₂₋₁₄ alkyl esters, and more preferably (meth) acrylic acid C₂₋₁₀ alkyl esters, such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth) acrylic acid nonadecyl, and (meth)acrylic acid eicosyl. Herein, the (meth)acrylic acid alkyl ester means an acrylic acid alkyl ester and/or a methacrylic acid alkyl ester, and all of the "(meth)..." expressions have the same meaning.

Examples of the (meth)acrylic acid ester other than the (meth)acrylic acid alkyl ester include, for example: (meth)acrylic acid esters having a alicyclic hydrocarbon group, such as cyclopentyl(meth)acrylate, cyclohexyl(meth)acrylate, and isobornyl (meth) acrylate; (meth) acrylic acid esters having an aromatic hydrocarbon group, such as phenyl(meth)acrylate; and (meth)acrylic acid esters obtained from an alcohol derived from a terpene compound, etc.

For the purpose of modifying cohesive force, heat resistance property, and cross-linking property, etc., the acrylic polymer may contain, if necessary, another monomer component (copolymerizable monomer) that is copolymerizable with the (meth)acrylic acid alkyl ester. Accordingly, the acrylic polymer may contain a copolymerizable monomer along with the (meth)acrylic acid alkyl ester as a major component. A monomer having a polar group can be preferably used as the copolymerizable monomer.

Specific examples of the copolymerizable monomer include: carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl) methyl methacrylate; acid anhydride group-containing monomers, such as maleic acid anhydride, and itaconic acid anhydride; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalene sulfonic acid; phosphate group-containing monomers, such as 2-hydroxyethyl acryloyl phosphate; (N-substituted)amide monomers, such as (meth)acrylamide, N,N-dimethyl(meth)acrylamide, N,N-diethyl(meth)acrylamide, N-isopropyl(meth)acrylamide, N-butyl(meth)acrylamide, N-methylol(meth)acrylamide, N-methylol propane (meth) acrylamide, N-methoxymethyl(meth)acrylamide, and N-butoxymethyl(meth)acrylamide; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; vinyl esters, such as vinyl acetate and vinyl propionate; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, and N-vinyl morpholine; N-vinyl carboxylic acid amides; lactam monomers, such as N-vinyl caprolactam; cyanoacrylate monomers, such as acrylonitrile and methacrylonitrile; (meth) acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; (meth)acrylic acid alkoxy alkyl monomers, such as (meth) acrylic acid methoxyethyl, and (meth) acrylic acid ethoxyethyl; styrene monomers, such as styrene and α-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxy ethylene glycol, and (meth)acrylic acid methoxy polypropylene glycol; acrylic acid ester monomers having a heterocycle, halogen atom, silicon atom, or the like, such as (meth)acrylic acid tetrahydrofurfuryl, fluoride(meth)acrylate, and silicone(meth)acrylate; olefin monomers, such as isoprene, butadiene, and isobutylene; vinyl ether monomers, such as methyl vinyl ether, and ethyl vinyl ether; thioglycolic acid; vinyl esters, such as vinyl acetate, and vinyl propionate; aromatic vinyl compounds such as styrene, and vinyl toluene; olefins or dienes, such as ethylene, butadiene, isoprene, and isobutylene; vinyl ethers, such as vinyl alkyl ether; vinyl chloride; (meth) acrylic acid alkoxy alkyl monomers, such as (meth) acrylic acid methoxyethyl and (meth)acrylic acid ethoxyethyl; sulfonic acid group-containing monomers, such as vinyl sulfonate sodium; imide group-containing monomers, such as cyclohexyl maleimide and isopropyl maleimide; isocyanate group-containing monomers, such as 2-isocyanate ethyl(meth)acrylate; fluorine atom-containing (meth)acrylates; and silicon atom-containing (meth)acrylates, etc. These copolymerizable monomers can be used alone or in combination of two or more thereof.

When the acrylic polymer contains the copolymerizable monomer along with the (meth) acrylic acid alkyl ester as a major component, carboxyl group-containing monomers can be preferably used. Among them, an acrylic acid can be preferably used. The use amount of the copolymerizable monomer is not particularly limited, but the copolymerizable monomer can be usually contained in an amount of 0.1 to 30% by weight based on the total weight of the monomer components for preparing the acrylic polymer, preferably in an amount of 0.5 to 20% by weight, and more preferably in an amount of 1 to 15% by weight.

When high corrosion resistance is required for adherends, such as a metal material, vinyl monomers having a nitrogen atom in their skeleton can be preferably used as a copolymerizable monomer. Among them, N-hydroxyalkyl(meth)acrylamide monomer and N-vinyl cyclic amide can be preferably used. The use amount of the copolymerizable monomer is not particularly limited, but the copolymerizable monomer can be usually contained in an amount of 0.1 to 30% by mass based on the total mass of the monomer components for preparing the acrylic polymer, preferably in an amount of 0.5 to 20% by mass, and more preferably in an amount of 1 to 15% by mass.

By containing the copolymerizable monomer in an amount of 0.1% by weight or more, a decrease in the cohesive force of the acrylic pressure-sensitive adhesive tape can be prevented and high shear force can be obtained. Further, by making the content of the copolymerizable monomer to be 30% by weight or less, it can be prevented that the cohesive force may become too high and the tackiness at normal temperature (25°C) can be improved.

The acrylic polymer may contain, if necessary, a polyfunctional monomer in order to adjust the cohesive force of the conductive pressure-sensitive adhesive tape to be formed.

Examples of the polyfunctional polymer include, for example: (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc. Among them, trimethylolpropane tri(meth)acrylate, hexanediol di(meth)acrylate, and dipentaerythritol hexa(meth)acrylate can be preferably used. The polyfunctional (meth) acrylates can be used alone or in combination of two or more thereof.

The use amount of the polyfunctional monomer is changed depending on the molecular weight or the number of functional groups thereof, but the polyfunctional monomer is added in an amount of 0.01 to 3.0% by weight based on the total weight of the monomer components for preparing the acrylic polymer, preferably in an amount of 0.02 to 2.0% by weight, and more preferably in an amount of 0.03 to 1.0% by weight.

If the use amount of the polyfunctional monomer exceeds 3.0% by weight based on the total weight of the monomer components for preparing the acrylic polymer, for example, the cohesive force of the pressure-sensitive adhesive layer may become too high and accordingly there are sometimes the cases where the adhesive force may be decreased. On the other hand, if the use amount thereof is below 0.01% by weight, for example, there are sometimes the cases where the cohesive force of the pressure-sensitive adhesive layer may be decreased.

### <Polymerization Initiator>

In preparing the acrylic polymer, various types of polymerization initiators (thermal polymerization initiator, photopolymerization initiator) can be used. Among them, it is preferable in the present invention to prepare the acrylic polymer with the use of a polymerization reaction by using a photopolymerization initiator (photoinitiator) and an ultraviolet ray. Thereby, advantages can be obtained, in which the polymerization time can be shortened by using the photopolymerization initiator and the conductive pressure-sensitive adhesive tape can be formed without the later-described heating forming agent being foamed before heat sensing. The photopolymerization initiator can be used alone or in combination of two or more thereof.

The photopolymerization initiator is not particularly limited, but, for example, a benzoin ether photopolymerization initiator, acetophenone photopolymerization initiator, α-ketol photopolymerization initiator, aromatic sulfonyl chloride photopolymerization initiator, photoactive oxime photopolymerization initiator, benzoin photopolymerization initiator, benzyl photopolymerization initiator, benzophenone photopolymerization initiator, ketal photopolymerization initiator, thioxanthone photopolymerization initiator, acylphosphine oxide photopolymerization initiator, or the like, can be used.

Specific examples of the benzoin ether photopolymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [made by BASF, product name: IRGACURE 651], and anisole methyl ether, etc. Specific examples of the acetophenone photopolymerization initiator include, for example: 1-hydroxycyclohexyl phenyl ketone [made by BASF, product name: IRGACURE 184], 4-phenoxy dichloroacetophenone, 4-t-butyl-dichloroacetophenone, 1-[4-(2-hydroxyethoxy)-phenyl]-2-hydroxy-2-methyl-1-propane-1 -one [made by BASF, product name: IRGACURE 2959], 2-hydroxy-2-methyl-1-phenyl-propane-1-one [made by BASF, product name: DAROCUR 1173], and methoxy acetophenone, etc. Specific examples of the α-ketol photopolymerization initiator include, for example: 2-methyl-2-hydroxy propiophenone and 1-[4-(2-hydroxyethyl)-phenyl]-2-hydroxy-2-methylpropane-1-one, etc. Specific examples of the aromatic sulfonyl chloride photopolymerization initiator include, for example, 2-naphthalene sulfonyl chloride, etc. Specific examples of the photoactive oxime photopolymerization initiator include, for example, 1-phenyl-1,1-propanedione-2-(o-ethoxycarbonyl)-oxime, etc.

Specific examples of the benzoin photopolymerization initiator include, for example, benzoin, etc. Specific examples of the benzyl photopolymerization initiator include, for example, benzyl, etc. Specific examples of the benzophenone photopolymerization initiators include, for example, benzophenone, benzoylbenzoic acid, 3,3'-dimethyl-4-methoxybenzophenone, polyvinyl benzophenone, and α-hydroxy cyclohexyl phenyl ketone, etc. Specific examples of the ketal photopolymerization initiator include, for example, benzyl dimethyl ketal, etc. Specific examples of the thioxanthone photopolymerization initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photopolymerization initiator include, for example:
bis(2,6-dimethoxybenzoyl)phenylphasphine oxide, bis(2,6-dimethoxybenzoyl)(2,4,4-trimethylpentyl) phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl) phosphine oxide, bis(2,4-dimethoxybenzoyl)(2-methypropane-1-yl) phosphine oxide, bis(2, 4, 6-trimethylbenzoyl)(2,4-dipentoxyphenyl) phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

Among them, bis(2,4,6-trimethylbenzoyl)phenylphosphine oxide [made by BASF, product name: IRGACURE 819], bis(2,4,6-trimethylbenzoyl)-2,4-di-n-butoxyphenylphosphine oxide, 2,4,6-trimethylbenzoyl diphenylphosphine oxide [made by BASF, product name: Lucirin TPO], and bis(2,6-dimethoxybenzoyl)-2,4,4-trimethylpentylphosphine oxide, are particularly preferred.

The use amount of the photopolymerization initiator is not particularly limited, but the photopolymerization initiator is combined, for example, in an amount of 0.01 to 5 parts by mass based on 100 parts by mass of the monomer components for preparing the acrylic polymer, preferably in an amount of 0.05 to 3 parts by mass, and more preferably in an amount of 0.08 to 2 parts by mass.

Herein, if the use amount of the photopolymerization initiator is below 0.01 parts by mass, there are sometimes the cases where a polymerization reaction is insufficient. If the use amount thereof exceeds 5 parts by mass, there are sometimes the cases where, because the photopolymerization initiator absorbs an ultraviolet ray, an ultraviolet ray may not reach the inside of the pressure-sensitive adhesive layer, thereby causing a decrease in the polymerization ratio. As the molecular weight of the polymer to be formed becomes smaller, the cohesive force of the pressure-sensitive adhesive layer to be formed becomes smaller, and when the pressure-sensitive adhesive layer is peeled off from a film, part of the adhesive layer is left on the film, thereby sometimes making it impossible to reuse the film. The photopolymerization initiator may be used alone or in combination of two or more thereof.

Besides the aforementioned polyfunctional monomers, a cross-linking agent can also be used for adjusting the cohesive force. Commonly-used cross-linking agents can be used as the cross-linking agent. Examples of the cross-linking agents include, for example: epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. Among them, in particular, the isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer can be prepared as a partial polymer (acrylic polymer syrup) in which the monomer has been partially polymerized by irradiating, with an ultraviolet (UV) ray, a mixture in which the monomer components and the polymerization initiator have been combined. The weight average molecular weight (Mw) of the acrylic polymer is, for example, within a range of 100000 to 5000000.

### <Conductive Filler>

The material of the conductive filler 30 is not particularly limited as far as the material is conductive, and examples thereof include metals, oxides, and conductive polymers, etc. The conductive filler 30 may be either of an inorganic compound and an organic compound. The materials described below can be used alone or in combination of two or more thereof as the conductive filler 30.

Examples of the metals for the conductive filler 30 include, for example: metals, such as copper, silver, gold, platinum, iron, nickel, aluminum, palladium, cadmium, chromium, manganese, tin, lead, zinc, bismuth, and indium; and alloys of these metals (e. g. , tin-zinc alloy, silver-tin-zinc alloy, nickel-chromium alloy, nickel-chromium-iron alloy, copper-manganese-nickel alloy, nickel-manganese-iron alloy, and copper-nickel alloy, etc.). Examples of the oxides for the conductive filler 30 include, for example, tin oxide, indium oxide, cadmium tin oxide, etc.

Examples of the conductive polymers for the conductive filler 30 include, for example, polyacetylene, polyaniline, polypyrrole, polythiophene, polyphenylene vinylene, and polyacene, etc.

With the multiple conductive fillers 30 contained in the conductive pressure-sensitive adhesive tape 10 being electrically connected to each other, as illustrated in Fig. 1, conductive paths communicating from one of the major surfaces of the tape 10 to the other major surface thereof are formed before temperature sensing. Although the conductive filler 30 has a needle-like shape in Fig. 1, the shape thereof is not limited thereto and may have a spherical shape, flake-like shape, or the like.

The addition amount of the conductive filler is not particularly limited as far as the conductivity is secured before temperature sensing; and it is preferable to add the conductive filler, for example, in an amount of 5 to 200 parts by mass, preferably in an amount of 10 to 100 parts by mass, and most preferably in an amount of 20 to 80 parts by mass, based on 100 parts by mass of the acrylic polymer.

### <Heating Foaming Agent>

The heating foaming agent 40 is not particularly limited as far as the agent is a heating-type foaming agent that is foamed or expanded by being heated, and a commonly-used or publicly known foaming agent can be used. Specific examples of the heating foaming agent 40 include, for example: low boiling point liquids or gases (e.g., chlorofluorocarbons, such as trichloro-fluoromethane; hydrocarbons, such as propane, butane, hexane, and benzene; ethers, such as methyl ether, and ethyl ether; and ketones, such as acetone, etc.); and substances that produce gases when subjected to pyrolysis (e.g., inorganic compounds, such as ammonium carbonate; azo compounds, such as azodicarbonamide; sulfonylhydrazide compounds, such as benzenesulfonyl hydrazide; nitroso compounds, such as N,N'-dinitrosopentamethylenetetramine; and azide compounds, such as terephthalazide, etc.). These foaming agents can be used alone or in combination of two or more thereof.

In particular, a thermally expandable microsphere (microcapsule) can be preferably used as the heating foaming agent 40. By using the heating foaming agent 40 formed into a microcapsule, the property of eliminating conductivity can be stably demonstrated.

The thermally expandable microsphere can be approximately selected from publicly known thermally expandable microspheres. The thermally expandable microsphere may be a microsphere in which a substance that is easily gasified and expanded by being heated, such as, for example, isobutane, propane, pentane, is contained in an elastic shell. The aforementioned shell is mostly formed of a thermally fusible substance or a substance that is broken by thermal expansion. Examples of the substance of which the shell is formed include, for example: a vinylidene chloride-acrylonitrile copolymer, polyvinyl alcohol, polyvinyl butyral, polymethylmethacrylate, polyacrylonitrile, polyvinylidene chloride, and polysulfone, etc. The thermally expandable microsphere can be produced by a commonly-used method, for example, by a coacervation method, interfacial polymerization method, or the like. Examples of the thermally expandable microsphere also include commercialized products, such as, for example, "Matsumoto Microsphere" series made by Matsumoto Yushi-Seiyaku Co., Ltd. (e.g., product name: "Matsumoto Microsphere F80SD", etc.).

As the thermally expandable microsphere, a thermally expandable microsphere, which has a moderate strength and accordingly is not broken before the coefficient of volume expansion reaches 5 times or more (preferably 7 times or more, particularly 10 times or more), is preferable.

The blending amount of the heating foaming agent 40 (in particular, thermally expandable microspheres) can be appropriately set in accordance with the type of the agent, the expansion ratio of the conductive pressure-sensitive adhesive tape 10, and the amount of the conductive filler 30 that can be contained in the tape 10, etc. ; however, the heating foaming agent 40 is generally contained, for example, in an amount of 10 to 200 parts by mass, preferably in an amount of 20 to 150 parts by mass, and more preferably in an amount of 25 to 100 parts by mass, based on 100 parts by mass of the acrylic pressure-sensitive adhesive 20 (base polymer).

The particle size of the thermally expandable microsphere can be appropriately selected in accordance with the thickness of the conductive pressure-sensitive adhesive tape 10, etc. The average particle size of the thermally expandable microsphere can be selected, for example, from a range of approximately 1 to 30 µm.

The particle size of the thermally expandable microsphere can be adjusted in the process through which the microsphere is created, or adjusted by a classification means, etc., after the microsphere has been created.

The temperature at which the foam formation of the heating foaming agent 40 is initialized is not particularly limited, but can be appropriately selected in accordance with the temperature at which the conductivity is eliminated; and can be selected, for example, from a range of approximately 110 to 200°C, preferably from a range of approximately 120 to 190°C, and more preferably from a range of approximately 130 to 180°C.

It is desirable that the heating foaming agent 40 has an insulation property. With the heating foaming agent 40 having an insulation property, it can be suppressed that, when the heating foaming agent 40 is expanded, electricity may be transmitted from one of the major surfaces of the conductive pressure-sensitive adhesive tape 10 to the other major surface thereof.

Fig. 2 is a sectional view schematically illustrating the conductive pressure-sensitive adhesive tape 10 after left uncontrolled under an atmosphere at 130°C for 5 minutes. As the outer shell of the heating foaming agent 40 is softened by being heated, the gas contained in the heating foaming agent 40 is gasified such that the internal pressure thereof is increased. The foaming shape is held by a balance between the internal pressure of the heating foaming agent 40 and the tension of the outer shell of the heating foaming agent 40. Thereby, the electrical connection (see Fig. 1) between the conductive fillers 30, which has been formed before the heating foaming agent 40 is foamed, is disconnected by the foamed heating foaming agent 40, as illustrated in Fig. 2, and the conductive paths communicating from one of the major surfaces of the conductive pressure-sensitive adhesive tape 10 to the other major surface thereof are eliminated. That is, the conductivity of the conductive pressure-sensitive adhesive tape 10 is eliminated by the heating foaming agent 40 that has been foamed by being heated.

Fine concavo-convex shapes are developed on both the major surfaces of the conductive pressure-sensitive adhesive tape 10 by the acrylic pressure-sensitive adhesive 20 following the thermal expansion of the heating foaming agent 40. Accordingly, the adhesive force between the conductive pressure-sensitive adhesive tape 10 and an adherend is reduced, thereby allowing the conductive pressure-sensitive adhesive tape 10 to be easily peeled off from the adherend. Further, because a layer of air is created between the conductive pressure-sensitive adhesive tape 10 and the adherend, the conduction between the adherends by which the conductive pressure-sensitive adhesive tape 10 is sandwiched can be more surely blocked.

The conductive pressure-sensitive adhesive tape 10 described above can be preferably used as a fuse for disconnecting an electric current by temperature sensing. More specifically, the conductive pressure-sensitive adhesive tape 10 according to the present embodiment can be used as a fuse in a current channel in a device (sometimes referred to as a "current heat generator") that generates heat immediately after a current flows therein, such as various machines or recording media (e.g., hard disk, etc.). With this fuse, the current flowing from one of the major surfaces of the conductive pressure-sensitive adhesive tape 10 to the other major surface thereof is disconnected, because the conductivity of the conductive pressure-sensitive adhesive tape 10 is eliminated when the temperature of the current heat generator becomes high because of the heat generation due to the use of the generator. As a result, operations of the current heat generator are stopped, which can prevent the current heat generator from being damaged due to a rise in the temperature. As stated above, the temperature at which the conductivity of the conductive pressure-sensitive adhesive tape 10 is eliminated can be changed by adjusting the temperature at which the foam formation of the heating foaming agent is initiated. Accordingly, it can be more appropriately suppressed that the current heat generator may be damaged by heat, by setting the temperature at which the conductivity of the conductive pressure-sensitive adhesive tape 10 is eliminated in accordance with the temperature at which the current heat generator using the tape 10 is damaged.

In the conductive pressure-sensitive adhesive tape 10 according to the present embodiment, before temperature sensing, sufficient adhesive force can be exerted in joining a metal material, such as stainless steel, aluminum, or the like, to an adherend by using the acrylic polymer as a base polymer. When the acrylic polymer, which serves as a base polymer, is photopolymerizable, it can be suppressed that the heating foaming agent 40 may be expanded before the conductive pressure-sensitive adhesive tape 10 senses temperature. Accordingly, the conductivity and adhesiveness of the conductive pressure-sensitive adhesive tape 10 before temperature sensing, and the elimination of the conductivity of the tape 10 after temperature sensing, can be both achieved.

### Examples

Although the present embodiments will now be described in more detail based on Examples, the present invention should not be limited to these Examples.

The layer structures and components of the conductive pressure-sensitive adhesive tapes with respect to Examples 1 and 2 and Comparative Examples 1 to 3 are shown in Table 1.

**[Table 1]**

| | PRESSURE-SENSITIVE ADHESIVE COMPOSITION | | CONDICTIVE FILLER | | HEATING FOAMING AGENT | | CROSS-LINKING AGENT | | PHOTOPOLYMERIZATION INITIATOR | | THICKNESS (*µ*m) |
|---|---|---|---|---|---|---|---|---|---|---|---|
| | COMPONENT | PARTS BY MASS | COMPONENT | PARTS BY MASS | COMPONENT | PARTS BY MASS | COMPONENT | PARTS BY MASS | COMPONENT | PARTS BY MASS | |
| EXAMPLE 1 | 2EHA/AA=90/10 | 100 | Ni POWDER | 40 | Expancel 461DU40 | 20 | TMPTA | 0.2 | IRGACURE 651 | 0.05 | 50 |
| EXAMPLE 2 | 2EHA/NVP/HEAA=70/26/4 | 100 | Ni POWDER | 40 | Expancel 461DU40 | 20 | TMPTA | 0.1 | IRGACURE 651 | 0.05 | 50 |
| COMPARATIVE EXAMPLE 1 | 2EHA/AA=90/10 | 100 | Ni POWDER | 40 | Expancel 461 DU40 | - | MPTA | 0.2 | IRGACURE 651 | 0.05 | 50 |
| COMPARATIVE EXAMPLE 2 | 2EHA/NVP/HEAA=70/26/4 | 100 | Ni POWDER | 40 | Expancel 461DU40 | - | TMPTA | 0.1 | IRGACURE 651 | 0.05 | 50 |
| COMPARATIVE EXAMPLE 3 | 2EHA/AA=90/10 | 100 | - | - | Expancel 461 DU40 | 20 | TMPTA | 0.2 | IRGACURE 651 | 0.05 | 50 |

The abbreviations in Table 1 represent the following compounds.
2EHA: 2-Ethylhexyl acrylate
AA: Acrylic acid
NVP: N-Vinyl-2-pyrrolidone
HEAA: N-Hydroxyethyl acrylamide
Ni powder: made by NOVAMET Specialty Products Corp., Particle size distribution (µm): d10 5.3, d50 11, d90 29
Expancel 461DU40(Product Name): made by Akzo Nobel N.V., Thermally expandable microsphere
TMPTA: Trimethylolpropane triacrylate
IRGACURE 651(Product Name): made by BASF, Photopolymerization Initiator

### (Preparation of Acrylic Polymer Syrup 1 (2EHA/AA = 90/10))

After TMPTA (0.2 parts by mass), a photopolymerization initiator (Product name: "IRGACURE 651", made by BASF, 0.05 parts by mass), Ni powder (made by NOVAMET Specialty Products Corp., particle size distribution (µm): d10 5.3, d50 11, d90 29, 40 parts by mass) as the conductive filler, and Expancel 461DU40 (made by Akzo Nobel N.V., 20 parts by mass) as the heating foaming agent, were blended into a monomer mixture composed of 2-ethylhexyl acrylate (90 parts by mass) and an acrylic acid (10 parts by mass), ultraviolet rays were radiated before the viscosity (BH viscometer, No. 5 rotor, 10 rpm, measurement temperature: 30°C) became 15 Pa*s to obtain a partially polymerized composition (an acrylic polymer syrup 1 as the acrylic pressure-sensitive adhesive).

### (Preparation of Acrylic Polymer Syrup 2 (2EHA/NVP/HEAA = 70/26/4))

After TMPTA (0.1 parts by mass), a photopolymerization initiator (Product name: "IRGACURE 651", made by BASF, 0.05 parts by mass), Ni powder (made by NOVAMET Specialty Products Corp., particle size distribution (µm): d10 5.3, d50 11, d90 29, 40 parts by mass) as the conductive filler, and Expancel 461DU40 (made by Akzo Nobel N.V., 20 parts by mass) as the heating foaming agent, were blended into a monomer mixture composed of 2-ethylhexyl acrylate (70 parts by mass), N-vinyl-2-pyrrolidone (made by NIPPON SHOKUBAI Co., Ltd., 26 parts by mass), and N-hydroxyethyl acrylamide (made by KOHJIN Co., Ltd., 4 parts by mass), ultraviolet rays were radiated before the viscosity (BH viscometer, No. 5 rotor, 10 rpm, measurement temperature: 30°C) became 15 Pa*s to obtain a partially polymerized composition (an acrylic polymer syrup 2 as the acrylic pressure-sensitive adhesive).

### (Example 1)

The aforementioned acrylic polymer syrup 1 was applied, with a roll coater, onto the surface of a polyester film having a thickness of 38 µm (polyester release liner) such that the thickness of the syrup 1 was 50 µm, the surface of the polyester film having been subj ected to a release treatment. Subsequently, the surface of another polyester release liner was pasted onto the other surface of the applied acrylic polymer syrup 1, the surface of the another polyester release liner having been subjected to a release treatment. Subsequently, ultraviolet rays were radiated, with a black light lamp having an illuminance of 5 mW/cm², from both the surfaces for 3 minutes. Thus, the conductive pressure-sensitive adhesive tape of Example 1, composed of a single pressure-sensitive adhesive layer having a thickness of 50 µm, was obtained.

### (Example 2)

The aforementioned acrylic polymer syrup 2 was applied, with a roll coater, onto the surface of a polyester film having a thickness of 38 µm (polyester release liner) such that the thickness of the syrup 2 was 50 µm, the surface of the polyester film having been subjected to a release treatment. Subsequently, the surface of another polyester release liner was pasted onto the other surface of the applied acrylic polymer syrup 2, the surface of the another polyester release liner having been subjected to a release treatment. Subsequently, ultraviolet rays were radiated, with a black light lamp having an illuminance of 5 mW/cm², from both the surfaces for 3 minutes. Thus, the conductive pressure-sensitive adhesive tape of Example 2, composed of a single pressure-sensitive adhesive layer having a thickness of 50 µm, was obtained.

### (Comparative Example 1)

The conductive pressure-sensitive adhesive tape of Comparative Example 1 is the same as that of Example 1, except that the heating foaming agent has not been added to the pressure-sensitive adhesive layer.

### (Comparative Example 2)

The conductive pressure-sensitive adhesive tape of Comparative Example 2 is the same as that of Example 2, except that the heating foaming agent has not been added to the pressure-sensitive adhesive layer.

### (Comparative Example 3)

The pressure-sensitive adhesive tape of Comparative Example 3 is the same as the conductive pressure-sensitive adhesive tape of Example 1, except that the conductive filler has not been added to the pressure-sensitive adhesive layer.

### (Evaluation of Pressure-Sensitive Adhesive Force)

A SUS 304BA plate was prepared as an adherend. After the SUS plate was subjected to ultrasonic cleaning (ethanol/toluene mixed solvent) in advance, the surface thereof was washed with ethanol, and the plate was left uncontrolled for 30 minutes or longer. One of the major surfaces of each of the conductive pressure-sensitive adhesive tapes of Examples and Comparative Examples was backed up with a polyethylene terephthalate film (PET substrate) having a thickness of 50 µm, and then cut into pieces having a size of 20 mm in width x 75 mm in length such that test specimens of the conductive pressure-sensitive adhesive tapes were formed. On the other hand, the other major surface of each of the conductive pressure-sensitive adhesive tapes was pasted onto the SUS 304BA plate and press-attached by reciprocating a 2-kg roller once, and then was left uncontrolled under a room temperature environment (23°C) for 30 minutes. Thereafter, an initial pressure-sensitive adhesive force (unit: N/20 mm) to the SUS 304BA plate was measured by peeling off, by using a tensile tensing machine, the conductive pressure-sensitive adhesive tape in the 180° peeling-off direction at a tension speed of 300 mm/min. The results of evaluating the pressure-sensitive adhesive force are shown in Table 2. As shown in Table 2, in the conductive pressure-sensitive adhesive tape of each of Examples 1 and 2, the pressure-sensitive adhesive force, occurring under the conditions in which the tape is peeled off in the 180° peeling-off direction at a tension speed of 300 mm/min after 30 minutes have elapsed at 23°C since the adhesion of the tape to the SUS 304BA plate, is 5 N/20 mm or more, and accordingly it can be confirmed that the normal adhesive force before temperature sensing is excellent.

**[Table 2]**

| | INITIAL PRESSURE-SENSITIVE ADHESIVE FORCE (N/20mm) | CONDUCTIVITY | | |
|---|---|---|---|---|
| | | AFTER 30 MINUTES | AFTER 3 DAYS (ROOM TEMPERATURE) | AFTER BEING HEATED AT 130°C FOR 5 MINUTES |
| EXAMPLE 1 | 7.6 | A | A | B |
| EXAMPLE 2 | 7.2 | A | A | B |
| COMPARATIVE EXAMPLE 1 | 9.3 | A | A | A |
| COMPARATIVE EXAMPLE 2 | 8.9 | A | A | A |
| COMPARATIVE EXAMPLE 3 | 8.1 | B | B | B |

### (Method of Evaluating Conductivity)

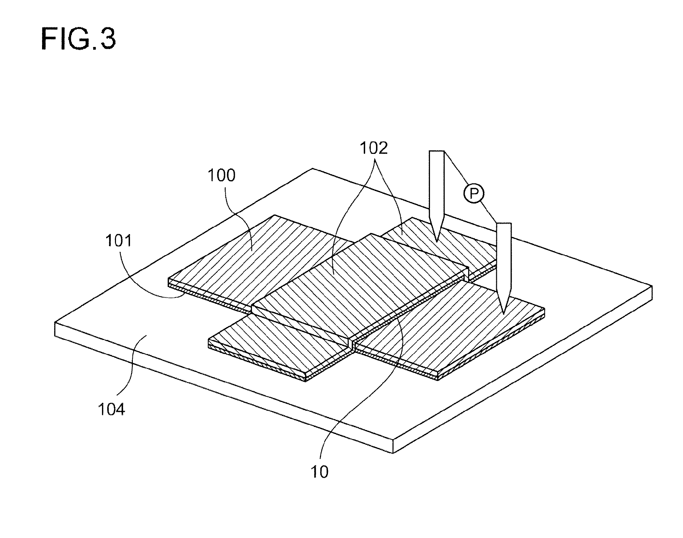

Fig. 3 is a schematic view illustrating a method of evaluating the conductive of the conductive pressure-sensitive adhesive tape. In evaluating the conductivity of the conductive pressure-sensitive adhesive tape, Al foils 100 and 102 for evaluating conductivity are first prepared. The size of each of the Al foils is 25 mm in width x 75 mm in length.

The Al foil 100 is pasted to a glass plate 104 having a thickness of 1.8 mm by using a generally-used double-sided tape 101. Subsequently, the Al foil 102 is pasted to the glass plate 104 and the Al foil 100 by using the conductive pressure-sensitive adhesive tape 10 such that the longitudinal direction of the Al foil 102 intersects that of the A1 foil 100.

In each of the conductive pressure-sensitive adhesive tapes 10 of Examples 1 and 2 and the pressure sensitive adhesive tapes 10 of Comparative Example 3, the conduction between the Al foils 100 and 102, occurring: after 30 minutes have elapsed since the adhesion; after 3 days have elapsed at room temperature (23°C); and after being heated at 130°C for 5 minutes, was evaluated. The evaluation was made in the following way: the electrodes of a tester were brought into contact with both the upper surface of the Al foil 100 other than the area where the AL foil 100 and the AL foil 102 were superimposed on each other (hereinafter, referred to as an superimposed area) and the upper surface of the Al foil 102 other than the superimposed area; and the case where a resistance value was confirmed (case where conduction was confirmed) was represented by "A", while the case where a resistance value was not confirmed (case where insulation was confirmed) was represented by "B". The results are shown in Table 2.

In Examples 1 and 2, conduction was confirmed after 30 minutes had elapsed or after 3 days had elapsed at room temperature (23°C); however, was not confirmed after being heated at 130°C for 5 minutes, and hence it was confirmed that the AL foils 100 and 103 were insulated from each other.

In Comparative Examples 1 and 2, conduction was confirmed in each of the cases where 30 minutes had elapsed, 3 days had elapsed at room temperature (23°C), and heating had been performed at 130°C for 5 minutes. In Comparative Example 3, conduction was obtained under neither condition.

## Claims

1. A conductive pressure-sensitive adhesive tape, comprising:
an acrylic pressure-sensitive adhesive;
a conductive filler; and
a heating foaming agent, wherein
the conductivity is eliminated by being heated.

2. The conductive pressure-sensitive adhesive tape according to claim 1, wherein
the heating foaming agent is a thermally expandable microsphere.

3. The conductive pressure-sensitive adhesive tape according to claim 1, wherein
a polymer that forms the acrylic pressure-sensitive adhesive is photopolymerizable.

4. The conductive pressure-sensitive adhesive tape according to claim 2, wherein
a polymer that forms the acrylic pressure-sensitive adhesive is photopolymerizable.

5. The conductive pressure-sensitive adhesive tape according to any of claims 1 to 4, wherein
a pressure-sensitive adhesive force of the conductive pressure-sensitive adhesive tape, occurring under conditions in which the tape is peeled off in the 180° peeling-off direction at a tension speed of 300 mm/min after 30 minutes have elapsed at 23°C since the adhesion of the tape to SUS 304 that is used as an adherend, is 5 N/20 mm or more.
